# EUROPÄISCHE PATENTANMELDUNG

(11) **EP 4 606 719 A1**
(43) Veröffentlichungstag der Anmeldung: **27.08.2025**
(21) Anmeldenummer: 25157180.8
(22) Anmeldetag: 11.02.2025
(51) Int. Cl.: B65C 9/00, B29C 49/24, B29C 49/64, B65C 9/24

(54) **VERFAHREN UND VORRICHTUNG ZUM ETIKETTIEREN VON KUNSTSTOFFBEHÄLTERN**

(30) Priorität: 13.02.2024 DE 102024103990
(71) Anmelder: KHS GmbH, 44143 Dortmund (DE)
(72) Erfinder: Striebel, Carlo, 44143 Dortmund (DE); Wörner, Robert, 44143 Dortmund (DE)
(74) Vertreter: Andrejewski - Honke Patent- und Rechtsanwälte Partnerschaft mbB

(57) **Zusammenfassung**

Die Erfindung betrifft ein Verfahren und eine Vorrichtung (1) zum Behandeln von Kunststoffbehältern mit einem durch eine Seitenwand und einen Bodenabschnitt umschlossenen Innenraum, welcher durch eine Behälteröffnung zugänglich ist. Dabei werden die Kunststoffbehälter einer Etikettiermaschine (17) zugeführt und in der Etikettiermaschine (17) mit einem Schmelzklebstoff versehen und durch den Schmelzklebstoff mit einem Etikett verbunden. Erfindungsgemäß werden die Kunststoffbehälter im erwärmten Zustand, insbesondere mit einer Temperatur von zumindest 30 °C, vorzugsweise zwischen 40 °C und 60 °C, besonders bevorzugt zwischen 42 °C und 55 °C der Etikettiermaschine (17) zugeführt.

## Beschreibung

Die Erfindung betrifft ein Verfahren und eine Vorrichtung zum Behandeln von Kunststoffbehältern mit einem durch eine Seitenwand und einen Bodenabschnitt umschlossenen Innenraum, welcher durch eine Behälteröffnung zugänglich ist. Dabei werden die Kunststoffbehälter einer Etikettiermaschine zugeführt und in der Etikettiermaschine mit einem Schmelzklebstoff versehen und durch den Schmelzklebstoff mit einem Etikett verbunden. Die Erfindung betrifft auch eine Vorrichtung zur Durchführung eines solchen Verfahrens.

Kunststoffbehälter, insbesondere Kunststoffflaschen finden in der Verpackungsindustrie vielfältig Anwendung. Diese zeichnen sich durch eine sehr gute Haltbarkeit und Flexibilität bei geringem Gewicht aus. Da die Kunststoffbehälter häufig durch einen Umformprozess - z. B. Streckblasen - hergestellt werden, verwendet man dabei üblicherweise transparentes Kunststoffmaterial, z. B. Polyethylenterephthalat (PET).

Um auf den Kunststoffbehältern Informationen und/oder Gestaltungselemente anzubringen sind mehrerer Lösungen bekannt. Zum einen können die Kunststoffbehälter unmittelbar bedruckt werden. Diese Technik ist jedoch hinsichtlich der Einsatzmöglichkeiten limitiert. Außerdem werden durch den Bedruckungsprozess Fremdstoffe in den Kunststoffbehälter eingebracht, welche ein sortenreines Recycling erschweren.

Die Erfindung geht von einem Etikettierungsprozess aus, bei dem ein Etikett mit dem Kunststoffbehälter verklebt wird. Das Etikett kann dabei ohne Beschränkung der Allgemeinheit beispielsweise aus Papier, einem Kunststoffblatt und/oder Kombinationen unterschiedlicher Materialien z. B. als Laminat bestehen. Das Etikett ist dabei bereits vorbereitet und mit den gewünschten Informations- und Gestaltungselementen ausgestattet und/oder kann nachfolgend bedruckt werden.

Die Verbindung zwischen dem Etikett und dem Kunststoffbehälter wird über einen Schmelzklebstoff hergestellt, welcher auch als Hotmelt bezeichnet wird. Ein solcher Klebstoff wird zur Verarbeitung erwärmt, sodass dieser flüssig oder zumindest verarbeitbar ist. In diesem Zustand kann der Klebstoff auf eine Außenfläche des Kunststoffbehälters aufgetragen werden. Anschließend wird das Etikett auf die aufgebrachte Klebestelle positioniert und dadurch mit dem Kunststoffbehälter verbunden. Schmelzklebstoff und Etikett können auch gleichzeitig auf den Kunststoffbehälter aufgebracht werden.

Bevorzugt wird ein drucksensitiver Schmelzklebstoff (pressure-sensitive adhesive, PSA) verwendet. Dessen Haftkraft hängt auch von mechanischem Druck ab, welcher darauf ausgeübt wird. Dadurch lässt sich der Zeitpunkt und die Positionierung der Klebeverbindung maschinell besser einstellen.

Dennoch ist die zuverlässig korrekte Positionierung der Etiketten - gerade bei besonders großen Durchsatzzahlen - mitunter herausfordernd. So kann es beispielsweise vorkommen, dass Kunststoffflaschen während des Handhabungsprozesses eine elektrostatische Aufladung erfahren. Aufgrund von unberechenbaren Anziehungskräften mit dem Etikett wird dann dessen Positionierung deutlich erschwert. Insbesondere kann es zu Fehlpositionierungen und/oder Faltenbildungen kommen.

Eine weitere Problemstellung bildet das sogenannte "Kriechverhalten". Sobald der Schmelzklebstoff vollständig ausgekühlt ist, geht dieser einen festen Verbund sowohl mit dem Behälterkörper als auch mit dem Etikett ein. Kommt es bei einer späteren Befüllung des Kunststoffbehälters - insbesondere unter Überdruck - zu einer Verformung des Kunststoffbehälters, werden diese Klebeverbindungen und/oder das Etikett mechanisch belastet. Im ungünstigsten Fall können sich hierdurch das Etikett verziehen oder die Klebestellen lösen, sodass der etikettierte und befüllte Kunststoffbehälter verworfen werden muss.

Vor diesem Hintergrund liegt der Erfindung die Aufgabe zugrunde, diese Probleme zu überkommen und die Haftverbindung zwischen Etikett und Kunststoffbehälter zu verbessern. Gegenstand der Erfindung und Lösung dieser Aufgabe ist ein Verfahren nach Anspruch 1 sowie eine Vorrichtung nach Anspruch 13. Bevorzugte Ausgestaltungen sind jeweils in den abhängigen Unteransprüchen angegeben.

Ausgehend von dem gattungsgemäßen Verfahren ist erfindungsgemäß vorgesehen, dass die Kunststoffbehälter im erwärmten Zustand, insbesondere mit einer Temperatur von zumindest 30 °C, vorzugsweise zwischen 30 °C und 60 °C, besonders bevorzugt zwischen 42 °C und 55 °C der Etikettiermaschine zugeführt werden. Während die Verarbeitungstemperatur - mit der der Schmelzklebstoff auf die Kunststoffbehälter aufgetragen wird - üblicherweise oberhalb von 100 °C, insbesondere zwischen 120 °C und 140 °C liegt, haben die zugeführten Kunststoffbehälter bisher eine deutlich niedrigere und im Allgemeinen nicht definierte Temperatur. Da sich diese im Laufe von Zuführstrecken üblicherweise der Umgebungstemperatur angleicht, liegt sie häufig im Bereich zwischen 10 °C und 25 °C - je nach Umgebung und Jahreszeit. Demgegenüber hat die Anmelderin festgestellt, dass durch das Zuführen eines gegenüber der Umgebungstemperatur erwärmten Kunststoffbehälters, insbesondere in einen Temperaturfenster zwischen 40 °C und 60 °C, ganz besonders bevorzugt zwischen 42 °C und 55 °C die Verarbeitung vereinfacht wird und überdiese eine verbesserte Kriechfestigkeit der Etiketten an den Kunststoffbehältern erzielt werden kann.

Die Temperatur meint dabei die durchschnittliche Temperatur des Kunststoffbehälters, insbesondere im Bereich der Seitenwand - da diese mit dem Schmelzklebstoff beaufschlagt wird und die Unterlage für das Etikett bildet. Auch wenn einzelne Abschnitte der Kunststoffbehälter - insbesondere im Bodenabschnitt oder in einem Öffnungsbereich - lokal abweichende Temperaturen aufweisen können, kommt es bei dem erfindungsgemäßen Effekt auf die Behältertemperatur an der Kontakt- und Verbindungsstelle mit Schmelzklebstoff und Etikett an.

Vorzugsweise werden die Kunststoffbehälter im leeren bzw. unbefüllten Zustand der Etikettiermaschine zugeführt. Unter "leer" ist dabei zu verstehen, dass der Behälter zu zumindest 90 Vol.-% (Umgebungs-)Luft enthällt. Davon unbenommen sind Stoffreste aus der Produktion wie (Wasser-)Dampf, Kondensate und ggf. Reste eines Reaktionsgases. "Unbefüllt" meint, dass der Innenraum des Kunststoffbehälters noch nicht mit einem vorgesehenen - flüssigen, pastösen und/oder rieselfähigen - Füllgut bestückt ist. Gegenüber einem Trimmprozess im (teil-)befüllten Zustand ergibt sich der Vorteil, dass die Temperatur des Behältermaterials nicht durch seinen Inhalt, sondern hauptsächlich durch die vorgelagerte Prozessführung bestimmt wird.

Gemäß einer bevorzugten Ausgestaltung werden die Kunststoffbehälter in einer Umformmaschine gebildet. Dies geschieht dadurch, dass Vorformlinge, welche eine durch eine Wandung umschlossenen und durch eine Zugangsöffnung zugänglichen Innenraum aufweisen, in der Umformmaschine erwärmt und zu den Kunststoffbehältern umgeformt werden. Dadurch, dass die Behälterherstellung sowie die erfindungsgemäße Etikettierung im erwärmten Zustand in einem Prozess miteinander verbunden werden, kann die definierte Erwärmung in der Umformmaschine genutzt werden, um die erfindungsgemäße Vorwärmung zu erzielen oder zumindest zu erleichtern. So kann die vorhandene Restwärme ausgenutzt werden. Sollte diese nicht zu einem hinreichend erwärmten Temperaturniveau oberhalb der Umgebungstemperatur führen, so wird doch zumindest der Energieaufwand für die zielgerichtete Temperierung reduziert.

Davon unbenommen ist vorzugsweise vorgesehen, dass die Kunststoffbehälter nach der Umformmaschine einer partiellen Kühlung, insbesondere im Bodenabschnitt unterzogen werden. Die partielle Kühlung dient zur Einstellung eines gewünschten räumlichen Temperaturprofils an den umgeformten Kunststoffbehältern. Beispielsweise kann vorgesehen sein, dass ein besonders thermisch belasteter Bereich im Bodenabschnitt des Kunststoffbehältersinsbesondere ein sogenannter "Anspritzpunkt" - kontrolliert auf einen Temperaturbereich abgekühlt wird, welcher eine sichere Weiterverarbeitung ermöglicht.

Besonders bevorzugt werden die Kunststoffbehälter von der Umformmaschine unmittelbar, d. h. ohne Zwischenschaltung weiterer Verarbeitungsschritte, an die Etikettiermaschine übergeben. Hierdurch ist es möglich, die Restwärme aus dem Umformprozess optimal zur Erzielung des erwärmten Zustands einzusetzen. Durch die Ausgestaltung der Transportstrecke zwischen der Umformmaschine und der Etikettiermaschine kann - auch ohne Erwärmung - direkter Einfluss auf die Behältertemperatur bei der Übergabe an die Etikettiermaschine genommen werden.

Besonders bevorzugt werden die Kunststoffbehälter direkt von der Umformmaschine an die Etikettiermaschine übergeben. Davon spricht man, wenn zwischen der Umformmaschine und der Etikettiermaschine keine oder wenige Handhabungseinheiten ausgebildet sind. Insbesondere weist die Umformmaschine eine Handhabungseinheit zur Ausgabe der umgeformten Kunststoffbehälter und die Etikettiermaschine eine Handhabungseinheit zur Übernahme der erwärmten Kunststoffbehälter auf. Bei einer direkten Verbindung - auch als Verblockung bezeichnet - sind die beiden Handhabungseinheiten miteinander identisch, unmittelbar aneinander angeschlossen oder durch nicht mehr als sechs, insbesondere nicht mehr als zwei weitere Handhabungseinheiten miteinander verbunden. Bei einer derartigen direkten Übergabe lässt sich die aus dem Umformprozess stammende Restwärme besonders effizient nutzen, ohne dass diese durch einen längeren Transportweg verloren geht.

Handhabungseinheiten bezeichnen Transportvorrichtungen, mit denen die Kunststoffbehälter vereinzelt bewegt werden können. Dazu zählen insbesondere sogenannte Transportsterne, welche an ihrem Umfang eine Vielzahl von Handhabungsstationen, insbesondere sogenannte Greifzangen aufweisen.

Es ist überdies vorzugsweise vorgesehen, dass die Kunststoffbehälter vor der Etikettiermaschine in einer Beschichtungsmaschine mit einer Beschichtung versehen werden. Eine Beschichtung meint einen innen- und/oder außenseitigen stofffremden und im Wesentlichen vollflächigen Auftrag auf der Oberfläche der Kunststoffbehälter. Dieser dient dazu, die Barriereeigenschaften der Kunststoffbehälter - z. B. für Gase wie Kohlendioxid, Wasserdampf oder Sauerstoff oder auch elektromagnetischer Strahlung - zu verbessern. Zur Beschichtung stehen verschiedene Technologien zur Verfügung. Ihnen ist jedoch gemeinsam, dass die Behälter während des Beschichtungsprozesses temperiert - d. h. auf eine bestimmte Temperatur eingestellt - oder gegenüber ihrer Ausgangstemperatur zusätzlich erwärmt werden. Diese kontrollierte Temperaturführung und/oder zusätzliche Erwärmung kann für die erfindungsgemäße Etikettierung im erwärmten Zustand zusätzlich genutzt werden.

Gemäß einer bevorzugten Ausgestaltung werden die Kunststoffbehälter in der Beschichtungsmaschine einem Plasmabeschichtungsverfahren, insbesondere PCVD (plasma chemical vapour deposition) bzw. PICVD (plasma-induced oder plasma-impulse chemical vapour deposition) unterzogen. Bei diesen Verfahren wird insbesondere im Bereich der Kunststoffbehälter ein insbesondere gepulstes Plasma gezündet. Dieser zusätzliche Energieeintrag kann in vorteilhafter Weise im Nebeneffekt zur Temperierung bzw. Erwärmung der Kunststoffbehälter genutzt werden. Hierdurch lassen sich die erfindungsgemäßen Vorteile an der Etikettiermaschine besonders leicht erzielen.

Gemäß einer besonders bevorzugten Ausgestaltung werden die Kunststoffbehälter in der Beschichtungsmaschine einem Vakuum mit einem Druck von vorzugsweise nicht mehr als 200 mbar, besonders bevorzugt 20 bis 70 mbar, insbesondere 30 bis 50 mbar ausgesetzt. Ein entsprechendes Vakuum wird häufig im Zusammenhang - jedoch nicht beschränkt auf - Plasmabeschichtungsprozesse eingesetzt und kann dort die Zündung des Plasmas vereinfachen bzw. ermöglichen. Als zusätzlicher Effekt wird durch die Erzeugung des Plasmas jedoch auch eine etwaige elektrostatische Aufladung der Kunststoffbehälter verringert oder gänzlich abgebaut. Dies erleichtert die Handhabung der Etiketten in der Etikettiermaschine.

Besonders bevorzugt ist vorgesehen, dass die Kunststoffbehälter von der Beschichtungsmaschine unmittelbar - d. h. ohne Zwischenschaltung zusätzlicher Verarbeitungsschritte an die Etikettiermaschine übergeben werden.

Besonders bevorzugt werden die Kunststoffbehälter direkt an die Etikettiermaschine übergeben im Sinne der oben beschriebenen Verblockung.

Bei Ausführungsformen, welche sowohl eine Umformmaschine als auch eine Beschichtungsmaschine vorsehen ist es überdies zur Herstellung eines kontrollierten Temperaturprofils und zur bestmöglichen Ausnutzung der Restwärme bevorzugt vorgesehen, dass die Kunststoffbehälter aus der Umformmaschine unmittelbar, insbesondere direkt an die Beschichtungsmaschine übergeben werden.

In einer bevorzugten Ausführungsform der Erfindung werden die Kunststoffbehälter in der Etikettiermaschine mit einem Überdruck zwischen 0,25 bar und 3 bar, vorzugsweise zwischen 0,3 bar und 0,5 bar beaufschlagt. Dazu wird dem Innenraum ein Kompressionsfluid, z. B. Druckluft zugeführt. Infolge des Innendrucks in Verbindung mit der erfindungsgemäßen Erwärmung findet während des Etikettierprozesses eine leichte Aufweitung des Kunststoffbehälters statt, während sich das Etikett und der Kunststoffbehälter durch den Schmelzklebstoff miteinander verbinden. Bei einem anschließenden Wegfall des Überdrucks verformt sich die Flasche zumindest teilweise elastisch zurück, sodass in der Verbindung zwischen dem Kunststoffbehälter und dem Etikett ein gewisses Spiel verbleibt. Dieses wirkt bei einem anschließenden Befüllen unter Überdruck der Gefahr eines möglichen Kriechens entgegen.

Gemäß einer besonders bevorzugten Ausgestaltung werden die Kunststoffbehälter anschließend in einer Füllmaschine mit einem Füllgut - insbesondere einem flüssigen oder pastösen Lebensmittel - befüllt. Dabei wird das Füllgut in den Innenraum des Kunststoffbehälters eingeleitet. Bevorzugt erfolgt der Befüllvorgang unter Überdruck, sodass der Innenraum anschließend unter Druck steht.

Vorzugsweise handelt es sich bei dem Füllgut um eine kohlensäurehaltige Flüssigkeit, insbesondere ein karbonisiertes Getränk. Durch die erfindungsgemäß verbesserte Kriechfestigkeit eignen sich die so behandelten und etikettierten Kunststoffbehälter besonders gut für kohlensäurehaltige Flüssigkeiten, welche mit einem Überdruck abgefüllt werden müssen.

Ganz besonders bevorzugt werden die Kunststoffbehälter von der Etikettiermaschine unmittelbar, d. h. ohne weitere Bearbeitungsschritte an die Füllmaschine übergeben. Ganz besonders bevorzugt erfolgt dabei eine direkte Übergabe im Sinne eines zuvor beschriebenen Verblockens. Neben der Platzersparnis bringt dies den Vorteil, dass die Kunststoffbehälter-Seitenwand sowie gegebenenfalls der darauf aufgetragene Schmelzklebstoff noch so weit erwärmt sind, dass diese beim Befüllen mit - insbesondere kohlensäurehaltigen - Füllgütern ein elastisch-nachgiebiges Verhalten zeigen und so dem Kriechen oder dem Verlust des Etiketts entgegenwirken.

Bevorzugt wird im Rahmen des erfindungsgemäßen Verfahrens ein Schmelzklebstoff (Hotmelt) verwendet, welcher eine dynamische Viskosität nach Brookfield (gemessen bei 160 °C) von 625 ± 125 mPa·s aufweist. Besonders bevorzugt weist dieser einen Erweichungspunkt zwischen ca. 55 °C und 65 °C auf.

Gegenstand der Erfindung ist auch eine Vorrichtung zur Behandlung von Kunststoffbehältern mit einem durch eine Seitenwand und einen Bodenabschnitt umschlossenen Innenraum, welcher durch eine Behälteröffnung zugänglich ist. Insbesondere ist die Vorrichtung geeignet zur Durchführung eines zuvor beschriebenen Verfahrens. Die Vorrichtung umfasst eine Etikettiermaschine, welche dazu eingerichtet ist, die Kunststoffbehälter zu übernehmen und mit einem Schmelzklebstoff zu versehen und durch den Schmelzklebstoff mit einem Etikett zu verbinden. Erfindungsgemäß ist die Vorrichtung dazu eingerichtet, die Kunststoffbehälter im erwärmten Zustand, insbesondere mit einer Temperatur von zumindest 30 °C, vorzugsweise zwischen 40 °C und 60 °C, besonders bevorzugt zwischen 42 °C und 55 °C der Etikettiermaschine zuzuführen. Dadurch ist die erfindungsgemäße Vorrichtung in der Lage, für eine verbesserte, durch den Schmelzklebstoff vermittelte Verbundhaftung zwischen dem Etikett und dem Kunststoffbehälter zu sorgen. Die erfindungsgemäße Vorrichtung ist dabei so ausgestaltet und konfiguriert, dass in ihrem Betrieb erwärmte Kunststoffbehälter an die Etikettiermaschine übergeben werden können.

Gemäß einer bevorzugten Ausgestaltung umfasst die Vorrichtung eine Umformmaschine, welche dazu eingerichtet ist, Vorformlinge mit einem durch eine Wandung umschlossenen und durch eine Zugangsöffnung zugänglichen Innenraum zu erwärmen und zu den Kunststoffbehältern umzuformen. Vorformlinge aus Kunststoffmaterial, z. B. Polyethylenterephthalat (PET) werden üblicherweise im Spritzgussverfahren aus einer Kunststoffschmelze hergestellt. In der Umformmaschine werden diese über eine Umformtemperatur erwärmt, sodass das Material plastisch verformbar ist. Die eigentliche Umformung erfolgt durch Beaufschlagung des Innenraums mit einem Überdruck. Man spricht in diesem Fall von einem sogenannten Blasprozess, bei dem der erwärmte Vorformling durch den innenseitigen Überdruck aufgeweitet wird. Im Zusammenspiel mit einer zugeordneten Außenform kann dabei die äußere Gestalt zielgerichtet festgelegt werden. Zusätzlich kann der erwärmte Vorformling mechanisch verformt werden, indem unmittelbar Kräfte eingeleitet werden, z. B. über eine sogenannte Reckstange. In diesem Fall spricht man von einem kombinierten Streck- und Blasprozess. Da die Vorformlinge in der Umformmaschine erwärmt werden müssen, haben die daraus gebildeten Kunststoffbehälter anschließend auch eine gewisse Restwärme, welche genutzt werden kann, um zu einem späteren Zeitpunkt erwärmte Kunststoffbehälter der Etikettiermaschine zuführen zu können.

Gemäß einer bevorzugten Ausgestaltung ist die Umformmaschine daher unmittelbar - d. h. ohne Zwischenschaltung zusätzlicher Bearbeitungsschritte - an die Etikettiermaschine angeschlossen. Besonders bevorzugt ist die Umformmaschine direkt an die Etikettiermaschine angeschlossen, also unter Zwischenschaltung von nicht mehr als sechs Handhabungseinheiten.

In diesem Fall sind die Umformmaschine und die Etikettiermaschine miteinander verblockt. Die Umformmaschine weist eine Ausgabe-Handhabungseinheit und die Etikettiermaschine eine Eingabe-Handhabungseinheit auf. Diese sind entweder identisch, unmittelbar aneinander angeschlossen oder über ein gemeinsames Transferrad miteinander verbunden. Weiterhin weisen sowohl die Umformmaschine als auch die Etikettiermaschine jeweils eine Einhausung auf. Bei miteinander verblockten Maschinen stoßen diese bevorzugt unmittelbar aneinander an oder sind zusammenhängend ausgebildet.

Zweckmäßigerweise weist die Vorrichtung eine (in der vorgesehenen Prozessstromrichtung) vor der Etikettiermaschine angeordnete Beschichtungsmaschine auf. Die Beschichtungsmaschine ist dazu eingerichtet, die sie durchlaufenden Kunststoffbehälter mit einer Beschichtung zu versehen. Dabei findet vorzugsweise ein Wärmeeintrag statt, sodass (zusätzliche) Restwärme vorliegt und die Kunststoffbehälter bereits für die Etikettierung im Rahmen der Erfindung ausreichend erwärmt sind oder mit geringerem (energetischem und apparativem) Aufwand erwärmt werden können.

Ganz besonders bevorzugt ist die Beschichtungsmaschine für ein Plasmabeschichtungsverfahren, insbesondere Plasma-induzierte chemische Dampfabscheidung (PCVD bzw. PICVD) eingerichtet. Zusätzlich zu dem dabei anfallenden Wärmeeintrag haben Plasmabeschichtungsverfahren den Vorteil, dass - auch i.V.m. einem anliegenden Vakuum - zusätzlich ein Abbau elektrostatischer Ladungen an den Kunststoffbehältern stattfindet. Dies vereinfacht die Handhabung während des Etikettierprozesses und ermöglicht so bessere Produktergebnisse.

Gemäß einer bevorzugten Ausgestaltung ist die Beschichtungsmaschine unmittelbar - d. h. ohne Zwischenschaltung zusätzlicher Bearbeitungsschritte - an die Etikettiermaschine angeschlossen. Besonders bevorzugt sind die Beschichtungsmaschine und die Etikettiermaschine direkt aneinander angeschlossen. Dabei sind die Beschichtungsmaschine und die Etikettiermaschine über nicht mehr als sechs Handhabungseinheiten miteinander verbunden. Ganz besonders bevorzugt ist die Beschichtungsanlage und die Etikettiermaschine mit aneinander angrenzenden Einhausungen verblockt.

Vorzugsweise ist eine hinter der Etikettiermaschine angeordnete Füllmaschine zur Befüllung der Kunststoffbehälter mit einem Füllgut vorgesehen. Durch Kombination mit einer Füllmaschine in einer einzigen Anlage, wird eine besonders effiziente Verfahrensführung ermöglicht.

Gemäß einer besonders bevorzugten Ausgestaltung ist die Etikettiermaschine unmittelbar - d. h. ohne Zwischenschaltung von zusätzlichen Bearbeitungsschritten - an die Füllmaschine angeschlossen. Besonders bevorzugt sind die Etikettiermaschine und die Füllmaschine direkt miteinander verbunden bzw. verblockt. Hierdurch können zwischen der Etikettiermaschine und der Füllmaschine Förder- und Pufferstrecken eingespart werden. Zusätzlich können die etikettierten Kunststoffbehälter mit einer gewissen Restwärme - in der Wandung des Kunststoffbehälters und auch in dem Schmelzklebstoff - der Füllmaschine zugeführt werden. Werden die Kunststoffbehälter durch das Befüllen verformt - beispielsweise durch einen innenseitigen Überdruck oder das Eigengewicht des Füllguts - können Schmelzklebstoff und Etikett im erwärmten Zustand diese Bewegung noch geringfügig ausgleichen.

Ganz besonders bevorzugt weist die Erfindung eine Kombination der vorgenannten Elemente auf. Insbesondere ist dabei eine Kombination aus Umformmaschine, Beschichtungsmaschine, Etikettiermaschine und Füllmaschine vorgesehen. Dadurch kann hinsichtlich der Nutzung von Wärmeenergie die bestmögliche Ausbeute erzielt werden. Ganz besonders bevorzugt sind die jeweiligen Arbeitsstufen jeweils miteinander direkt verbunden bzw. miteinander verblockt. Durch diesen "Quadroblock" bzw. diese Vierfach-Verblockung wird der erfindungsgemäße Effekt optimal bei gleichzeitiger Platzoptimierung erreicht.

Die Erfindung wird nachfolgend anhand von einer lediglich ein Ausführungsbeispiel darstellenden Figur erläutert. Diese zeigt eine schematische Draufsicht auf eine erfindungsgemäße Vorrichtung 1 zum Behandeln von Kunststoffbehältern. Die nicht näher dargestellten Kunststoffbehälter weisen einen durch eine Seitenwand und einen Bodenabschnitt begrenzten Innenraum auf, welcher durch einen Öffnungsabschnitt zugänglich ist. Die Kunststoffbehälter können ohne Beschränkung der Erfindung z. B. Kunststoffflaschen oder Kanister sein.

Die erfindungsgemäße Vorrichtung 1 umfasst eine Umformmaschine 2, welche von einer Einhausung 3 umschlossen ist. Die Umformmaschine 2 übernimmt Vorformlinge, welche einen durch eine Wandung umschlossenen und durch eine Zugangsöffnung zugänglichen Innenraum aufweisen, von einer Vorformlingzuführung 4. Diese werden anschließend in einem sogenannten Heiztunnel 5 auf eine Umformtemperatur oberhalb von 130 °C erwärmt.

Anschließend werden die erwärmten Vorformlinge in Blasformen, welche auf einem sogenannten Blasrad 6 angeordnet sind, durch einen Streckblas-Prozess zu Kunststoffbehältern umgeformt. Die Kunststoffbehälter verlassen danach über ein Ausgaberad 7 die Einhausung 3 der Umformmaschine 2.

Die Kunststoffbehälter werden von Transportsternen 8 als Handhabungseinheiten einer Transportvorrichtung 9 übernommen und in Richtung einer Beschichtungsmaschine 10 weiter transportiert. Die Transportsterne 8 übergeben die Kunststoffbehälter an eine Eingabe-Handhabungseinheit 11 der Beschichtungsmaschine 10. Hierdurch sind die Umformmaschine 2 und die Beschichtungsmaschine 10 unmittelbar und direkt miteinander verbunden.

Im Bereich eines der Transportsterne 8 ist überdies eine selektive Bodenkühlung 12 angeordnet. Dadurch kann ein Bereich der Bodenwandung - der sogenannte Anspritzpunkt - während des Transports gezielt heruntergekühlt werden, um eine ausreichende Stabilität in der Beschichtungsmaschine 10 zu gewährleisten.

Die Beschichtungsmaschine 10 ist für die Durchführung des Plasmabeschichtungsverfahrens PICVD eingerichtet. Dazu werden die von der Transportvorrichtung 9 übernommenen Behälter zu Vierergruppen gruppiert den Beschichtungsstationen 12 zugeführt, welche am Umfang eines Beschichtungsrades 13 angeordnet sind. In den Beschichtungsstationen 12 werden die Kunststoffbehälter in einem Vakuum mit einem Druck zwischen 30 und 50 bar beaufschlagt und mit einem Reaktionsgas umspült. Durch in die Beschichtungsstation 12 eingeleitete Mikrowellenenergie werden dann Plasmen gezündet, welche zur Abscheidung einer Beschichtung auf den Kunststoffbehältern führt. Gleichzeitig kommt es zu einem Wärmeeintrag, welcher eine Erwärmung zwischen ca. 30 K und 35 K zur Folge hat.

Die beschichteten Behälter verlassen anschließend durch ein Beschichtungs-Ausgaberad 14 die Einhausung 15 der Beschichtungsmaschine 10. Das Beschichtungs-Ausgaberad 14 ist gleichzeitig auch das Eingaberad 16 einer nachfolgenden Etikettiermaschine 17, deren Einhausung 18 unmittelbar an die Einhausung 15 der Beschichtungsmaschine 10 anschließt. Durch die vorherige Erwärmung und diese Verblockung werden die beschichteten Kunststoffbehälter erfindungsgemäß im erwärmten Zustand an die Etikettiermaschine 17 übergeben.

In der Etikettiermaschine 17 werden die Kunststoffbehälter in einer Hotmelt-Station 19 mit einem Schmelzklebstoff beaufschlagt und anschließend durch eine Etikettierstation 20 mit einem Etikett versehen.

Die beschichteten und etikettierten Kunststoffbehälter verlassen über ein Etikettierungs-Ausgaberad 21 die Einhausung 18 der Etikettiermaschine 17. Dieses übergibt die Kunststoffbehälter an ein Füller-Eingaberad 22, welches diese in die Einhausung 23 einer Füllmaschine 24 transportiert. Dort werden die Kunststoffbehälter auf einem Füllrad 25 mit einem Füllgut befüllt. Die Einhausung 18 der Etikettiermaschine 17 und die Einhausung 23 der Füllmaschine 24 sind durch einen kurzen Verbindungstunnel 26 im Rahmen der Verblockung miteinander verbunden.

### Bezugszeichenliste

- 1: Vorrichtung
- 2: Umformmaschine
- 3, 15, 18, 23: Einhausung
- 4: Vorformlingzuführung
- 5: Heiztunnel
- 6: Blasrad
- 7: Ausgaberad
- 8: Transportsterne
- 9: Transportvorrichtung
- 10: Beschichtungsmaschine
- 11: Eingabe-Handhabungseinheit
- 12: Beschichtungsstation
- 13: Beschichtungsrad
- 14: Beschichtungs-Ausgaberad
- 16: Eingaberad
- 17: Etikettiermaschine
- 19: Hotmelt-Station
- 20: Etikettierstation
- 21: Etikettierungs-Ausgaberad
- 22: Füller-Eingaberad
- 24: Füllmaschine

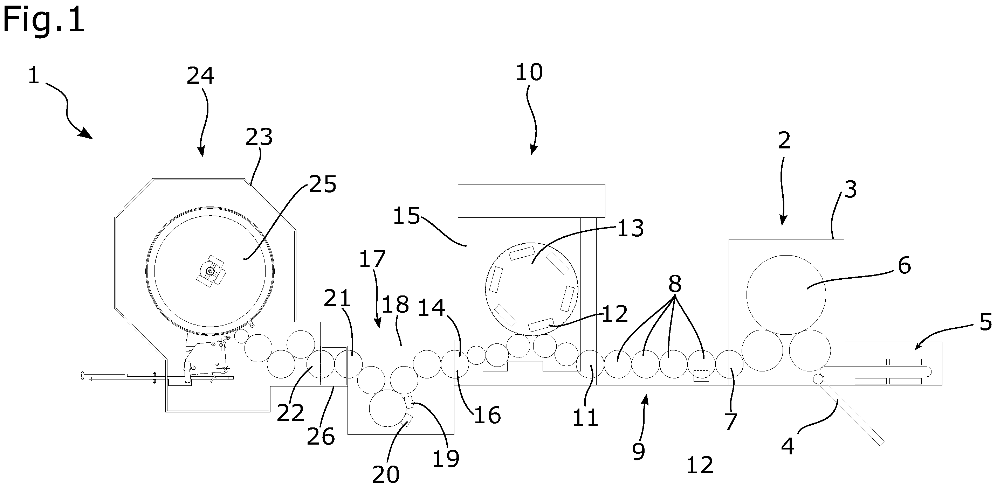

## Patentansprüche

1. Verfahren zum Behandeln von Kunststoffbehältern mit einem durch eine Seitenwand und einen Bodenabschnitt umschlossenen Innenraum, welcher durch eine Behälteröffnung zugänglich ist, wobei die Kunststoffbehälter einer Etikettiermaschine (17) zugeführt und in der Etikettiermaschine (17) mit einem Schmelzklebstoff versehen und durch den Schmelzklebstoff mit einem Etikett verbunden werden, **dadurch gekennzeichnet, dass** die Kunststoffbehälter im erwärmten Zustand, insbesondere mit einer Temperatur von zumindest 30 °C, vorzugsweise zwischen 30 °C und 60 °C, besonders bevorzugt zwischen 42 °C und 55 °C der Etikettiermaschine (17) zugeführt werden.

2. Verfahren nach dem vorangegangenen Anspruch, **dadurch gekennzeichnet, dass** die Kunststoffbehälter in einer Umformmaschine (2), insbesondere in einer Blasmaschine oder Streckblasmaschine, gebildet werden, indem Vorformlinge, welche eine durch eine Wandung umschlossenen und durch eine Zugangsöffnung zugänglichen Innenraum aufweisen, in der Umformmaschine (2) erwärmt und zu den Kunststoffbehältern umgeformt werden.

3. Verfahren nach dem vorangegangenen Anspruch, **dadurch gekennzeichnet, dass** die Kunststoffbehälter nach der Umformmaschine (2) einer partiellen Kühlung, insbesondere in dem Bodenabschnitt, unterzogen werden.

4. Verfahren nach einem der vorangegangenen Ansprüche 2 oder 3, **dadurch gekennzeichnet, dass** die Kunststoffbehälter von der Umformmaschine (2) unmittelbar, insbesondere direkt, an die Etikettiermaschine (17) übergeben werden.

5. Verfahren nach einem der vorangegangenen Ansprüche 1 bis 3, **dadurch gekennzeichnet, dass** die Kunststoffbehälter vor der Etikettiermaschine (17) in einer Beschichtungsmaschine (10) mit einer Beschichtung versehen werden.

6. Verfahren nach dem vorangegangenen Anspruch, **dadurch gekennzeichnet, dass** die Kunststoffbehälter in der Beschichtungsmaschine (10) einem Plasmabeschichtungsverfahren, insbesondere PCVD-Verfahren unterzogen werden.

7. Verfahren nach einem der vorangegangenen Ansprüche 5 oder 6, **dadurch gekennzeichnet, dass** die Kunststoffbehälter in der Beschichtungsmaschine (10) einem Vakuum mit einem Druck von vorzugsweise nicht mehr als 200 mbar, besonders bevorzugt zwischen 20 mbar und 70 mbar, insbesondere zwischen 30 mbar und 50 mbar ausgesetzt werden.

8. Verfahren nach einem der vorangegangenen Ansprüche 5 bis 7, **dadurch gekennzeichnet, dass** die Kunststoffbehälter von der Beschichtungsmaschine (10) unmittelbar, insbesondere direkt an die Etikettiermaschine (17) übergeben werden.

9. Verfahren nach einem der vorangegangenen Ansprüche, **dadurch gekennzeichnet, dass** die Kunststoffbehälter in der Etikettiermaschine (17) mit einem Überdruck zwischen 0,25 bar und 3 bar, vorzugsweise zwischen 0,3 bar und 0,5 bar beaufschlagt werden.

10. Verfahren nach einem der vorangegangenen Ansprüche, **dadurch gekennzeichnet, dass** die Kunststoffbehälter anschließend in einer Füllmaschine (24) mit einem Füllgut befüllt werden.

11. Verfahren nach dem vorangegangenen Anspruch, **dadurch gekennzeichnet, dass** das Füllgut eine kohlensäurehaltige Flüssigkeit, insbesondere ein karbonisiertes Getränk ist.

12. Verfahren nach einem der vorangegangenen Ansprüche 10 oder 11, **dadurch gekennzeichnet, dass** die Kunststoffbehälter von der Etikettiermaschine (17) unmittelbar, insbesondere direkt an die Füllmaschine (24) übergeben werden.

13. Vorrichtung (1) zum Behandeln von Kunststoffbehältern mit einem durch eine Seitenwand und einen Bodenabschnitt umschlossenen Innenraum, welcher durch eine Behälteröffnung zugänglich ist, insbesondere zur Durchführung eines Verfahrens nach einem der vorangegangenen Ansprüche, mit einer Etikettiermaschine (17), welche dazu eingerichtet ist die Kunststoffbehälter zu übernehmen und mit einem Schmelzklebstoff zu versehen und durch den Schmelzklebstoff mit einem Etikett zu verbinden, **dadurch gekennzeichnet, dass** die Vorrichtung dazu eingerichtet ist, die Kunststoffbehälter im erwärmten Zustand, insbesondere mit einer Temperatur von zumindest 30 °C, vorzugsweise zwischen 40 °C und 60 °C, besonders bevorzugt zwischen 42 °C und 55 °C der Etikettiermaschine zuzuführen.

14. Vorrichtung (1) nach dem vorangegangenen Anspruch, **gekennzeichnet durch** eine Umformmaschine (2), insbesondere Blasmaschine oder Streckblasmaschine, welche dazu eingerichtet ist Vorformlinge, welche eine durch eine Wandung umschlossenen und durch eine Zugangsöffnung zugänglichen Innenraum aufweisen, zu erwärmen und zu den Kunststoffbehältern umzuformen.

15. Vorrichtung (1) nach dem vorangegangenen Anspruch, **dadurch gekennzeichnet, dass** die Umformmaschine (2) unmittelbar, insbesondere direkt, an die Etikettiermaschine (17) angeschlossen ist.

16. Vorrichtung (1) nach einem der vorangegangenen Ansprüche 13 oder 14, **gekennzeichnet durch** eine, insbesondere vor der Etikettiermaschine (17) angeordnete, Beschichtungsmaschine (10).

17. Vorrichtung (1) nach dem vorangegangenen Anspruch, **dadurch gekennzeichnet, dass** die Beschichtungsmaschine (10) für ein Plasmabeschichtungsverfahren, insbesondere PCVD bzw. PICVD eingerichtet ist.

18. Vorrichtung (1) nach einem der vorangegangenen Ansprüche 16 oder 17, **dadurch gekennzeichnet, dass** die Beschichtungsmaschine (10) unmittelbar, insbesondere direkt, an die Etikettiermaschine (17) angeschlossen ist.

19. Vorrichtung (1) nach einem der vorangegangenen Ansprüche 13 bis 18, **gekennzeichnet durch** eine hinter der Etikettiermaschine (17) angeordnete Füllmaschine (24) zum Befüllen der Kunststoffbehälter mit einem Füllgut.

20. Vorrichtung (1) nach dem vorangegangenen Anspruch, **dadurch gekennzeichnet, dass** die Etikettiermaschine (17) unmittelbar, insbesondere direkt an die Füllmaschine (24) angeschlossen ist.
